Europäisches Patentamt

European Patent Office

Office européen des brevets

(19)

(11) Veröffentlichungsnummer: **0 000 357**
A1

# (12) EUROPÄISCHE PATENTANMELDUNG

(21) Anmeldenummer: 78100276.1

(22) Anmeldetag: 29.06.78

(51) Int. Cl.²: **C08J3/20**
// B29F3/00, C08L23/04,
H01B3/44

(30) Priorität: 12.07.77 DE 2731420

(71) Anmelder: **BASF Aktiengesellschaft, Carl-Bosch-Strasse 38, D-6700 Ludwigshafen (DE)**

(43) Veröffentlichungstag der Anmeldung: 24.01.79
Patentblatt 79/2

(72) Erfinder: **Glaser, Rudolf, Dr., Don-Carlos-Strasse 9, D-6700 Ludwigshafen (DE)**
**Moorwessel, Dieter, Dr., Dilsberger Strasse 3-5, D-6800 Mannheim 51 (DE)**
**Bauer, Peter, Erich-Kästner-Strasse 13, D-6700 Ludwigshafen-Oggersheim (DE)**
**Koehnlein, Ernst, Dr., Ungsteiner Strasse 4, D-6700 Ludwigshafen (DE)**

(84) Benannte Vertragsstaaten: **BE CH DE FR GB NL SE**

(54) **Verfahren zur Herstellung von Formmassen aus vernetzbaren Äthylenpolymerisaten und deren Verwendung als Elektroisoliermassen.**

(57) Verfahren zur Herstellung von Formmassen aus vernetzbaren Äthylenpolymerisaten. Bei diesem Verfahren wird in der angegebenen Reihenfolge das Äthylenpolymerisat bei 150 bis 220°C mit einem Stabilisator gemischt, die erhaltene heisse Schmelze durch eine Siebpassage von Verunreinigungen getrennt, die gereinigte Schmelze granuliert und abgekühlt, das erhaltene Granulat zusammen mit 1,0 bis 3,0 Gewichtsprozent eines geschmolzenen Peroxids, das eine Temperatur von 40 bis 90° C aufweist, kontinuierlich der auf 0 bis 30° C gekühlten Einzugszone eines Extruders zugeführt, im Extruder auf 110 bis 135° C gebracht und die erhaltene Mischung in üblicher Weise verarbeitet. Die erhaltenen Äthylenpolymerisatmassen sind besonders geeignet für die Herstellung von Elektroisolierungen.

0000357

BASF Aktiengesellschaft                    O.Z. 32 686

Verfahren zur Herstellung von vernetzbaren Äthylenpolymerisaten

Die Erfindung betrifft ein Verfahren zur Herstellung von
Formmassen aus vernetzbaren, einen oder mehrere Stabilisatoren enthaltenden Äthylenpolymerisaten der Dichte von
0,918 bis 0,935 g/cm$^3$ und des Schmelzindex von 0,05 bis
25 g/10 min.

Bei derartigen Formmassen aus vernetzbaren Äthylenpolymerisaten handelt es sich um ungeformte oder vorgeformte Stoffe,
die durch Erhitzen innerhalb bestimmter Temperaturbereiche
zu Formstoffen oder Formteilen aus vernetzten Äthylenpolymerisaten verarbeitet werden können.

Es ist bekannt, Äthylenpolymerisate, welche übliche Stabilisatoren und Peroxide enthalten, durch Erhitzen auf Temperaturen über die Zersetzungstemperatur des Peroxids zu vernetzen. Die Herstellung der Mischungen aus Äthylenpolymerisat, Stabilisator(en) und Peroxiden erfolgt nach dem bekannten Stand der Technik durch Verkneten der Komponenten in
diskontinuierlich oder kontinuierlich arbeitenden Mischern,
wobei man die drei Komponenten gleichzeitig vermischt. Der
Mischprozeß erfolgt unterhalb der Zerfallstemperatur des
Peroxids, bevorzugt bei Temperaturen zwischen 115 und 130°C.

89/77   Fre

Aus der DT-OS 21 24 941 ist es auch bereits bekannt, feinteilige Olefinpolymerisate mit flüssigen Peroxiden bei Temperaturen bis maximal 70°C zu mischen, wobei man die beiden Komponenten kontinuierlich im gewünschten Verhältnis zusammenbringt und anschließend in einer Zone umwälzt, deren Verhältnis von Länge zu Durchmesser mindestens 10 : 1 beträgt. Nach diesem Verfahren kommt man zu vernetzbaren, Peroxide enthaltenden Olefinpolymerisatmassen.

Aus der DT-OS 22 20 147 ist ferner ein Verfahren zur Herstellung von vernetzten Äthylenpolymerisaten durch gleichzeitiges Mischen von feinteiligen Äthylenpolymerisaten mit einem Peroxid und einem Stabilisator bei Temperaturen oberhalb des Schmelzpunktes des Äthylenpolymerisats bekannt, wobei man eine Lösung des Stabilisators in einem flüssigen organischen Peroxid kontinuierlich zusammen mit dem Äthylenpolymerisat der Einzugszone eines Extruders zuführt. Die drei Komponenten werden anschließend durch die Extruderpassage bei Temperaturen zwischen 100 und 130°C gemischt. Der Nachteil dieses Verfahrens bssteht darin, daß produktfremde Verunreinigungen, die stets in einem technischen Polyäthylen enthalten sind, nicht durch Siebpassage der peroxidhaltigen Schmelze gereinigt werden können, weil eine solche Passage zu lokalen Temperaturerhöhungen und damit zu inhomogen verteilten Vernetzungen im Äthylenpolymerisat führt. Eine Reinigung des Äthylenpolymerisats ist aber notwendig für die Herstellung technisch hochwertiger Fertigungserzeugnisse wie Isolierungen von Hochspannungskabeln.

Der Erfindung liegt die Aufgabe zugrunde, ein vernetzbares, stabilisatorhaltiges Äthylenpolymerisat aufzuzeigen, welches weder inhomogene Teilvernetzungen noch produktfremde Verunreinigungen enthält.

Diese Aufgabe wird erfindungsgemäß dadurch gelöst, daß man in der angegebenen Reihenfolge

a) das Äthylenpolymerisat bei einer Temperatur zwischen 150 und 220°C mit dem Stabilisator mischt,

b) die heiße Schmelze durch eine Siebpassage von Verunreinigungen trennt,

c) die gereinigte Schmelze granuliert und abkühlt,

d) das erhaltene Granulat und gleichzeitig, aber getrennt vom Granulat, 1,0 bis 3,0 Gewichtsprozent eines geschmolzenen organischen Peroxids, das eine Temperatur von 40 bis 90°C aufweist, kontinuierlich der auf 0 bis 30°C gekühlten Einzugszone eines Extruders zuführt,

e) in der Schmelzenzone des Extruders bei Temperaturen zwischen 110 und 135°C mischt und

f) die so erhaltene vernetzbare Polymerisatmischung in üblicher Weise granuliert oder direkt zum Formteil verarbeitet.

Bevorzugt ist die Verwendung von Dicumylperoxid oder von Bis(tert.-butyl-peroxyisopropyl)benzol als Peroxid und von 0,1 bis 0,6 Gewichtsprozent 4,4'-Thio-bis(6-tert.-butyl-m-cresol) als Stabilisator.

Nach bevorzugtem Verfahren erfolgt die Siebpassage durch ein Sieb von 200 bis 500 mesh (nach ASTM E11/61).

Unter Äthylenpolymerisaten werden verstanden Polyäthylen mit einer Dichte von 0,918 bis 0,935 g/cm$^3$ nach DIN 53 479 und einem Schmelzindex von 0,05 bis 25, bevorzugt 0,5 bis 6 g/ 10 min., nach ASTM D 1238 T bei 190°C und einem Auflagegewicht von 2,16 kp. Es eignen sich als Äthylenpolymerisate aber auch Copolymerisate des Äthylens mit einer oder mehreren äthylenisch ungesättigten Verbindungen. Als Comonomere sind vor allem die Vinylester einer $C_2$- bis $C_3$-Alkancarbonsäure oder die $C_1$- bis $C_8$-Alkylester einer $C_3$- bis $C_4$-Alkencarbonsäure, wobei die Copolymerisate mindestens 50, maximal 97 Gewichtsprozent Äthylen einpolymerisiert enthalten, zu nennen. Besonders hervorzuheben sind die Copolymerisate des Äthylens mit Vinylacetat oder Acrylsäureäthyl- bzw. -butylestern. Der Schmelzindex der Copolymerisate beträgt ebenfalls 0,05 bis 25 g/10 min.

Unter Stabilisatoren werden die üblichen Zusatzstoffe verstanden, welche das Äthylenpolymerisate während der Verarbeitung bei hoher Temperatur vor Zersetzungen schützen. Die Stabilisatoren können in Mengen von 0,1 bis 0,6, bevorzugt 0,1 bis 0,4 Gewichtsprozent, bezogen auf das Äthylenpolymerisat, in der Formmasse eingemischt sein. Geeignete Stabilisatoren sind insbesondere das 4,4'-Thio-bis(3-methyl-6-tert.-butyl-1-phenol), 1,1'-Thio-bis-(2-hydroxy-6-tert.-butylbenzol), Dilauroyl-thio-dipropionat und das Distearyl-thiodipropionat. Die Formmasse kann einen Stabilisator oder mehrere verschiedene einschlägig bekannte Stabilisatoren enthalten. Es kommen auch Gemisch eines der oben genannten Stabilisatoren mit Schwefel in Betracht.

Zur erfindungsgemäßen Herstellung der vernetzbaren Äthylenpolymerisate werden die Äthylenpolymerisate zunächst mit dem Stabilisator oder Stabilisatorgemisch bei Temperaturen zwischen 150 und 220°C gemischt. Dieser Mischvorgang kann in einschlägig üblicher Weise in üblichen Mischern, wie z.B. einem Kneter, vorgenommen werden.

Die 150 bis 220°C heiße Schmelze aus Äthylenpolymerisat und Stabilisator wird anschließend durch Passieren einer Siebvorrichtung von Verunreinigungen getrennt. Unter Verunreinigungen werden dabei verstanden Schmutz- und/oder Staubteilchen, zusammengebackene Stabilisatorklumpen sowie auch vernetzte und/oder verkokte Polymerisatteilchen. Nach bevorzugter Verfahrensweise erfolgt die Siebpassage des Polymerisat-/Stabilisatorgemischs durch ein Sieb, das eine Siebfeinheit von 200 bis 500, bevorzugt 300 bis 400 mesh (nach ASTM E11/61) aufweist.

Das gereinigte, völlig homogene Gemisch aus Äthylenpolymerisat und Stabilisator wird anschließend in einschlägig üblicher Weise granuliert und abgekühlt.

Wesentlich für das erfindungsgemäße Verfahren ist die Maßnahme, das so erhaltene Polyolefingranulat und gleichzeitig, aber getrennt vom Granulat, 1,0 bis 3,0 Gewichtsprozent, bezogen auf die Gesamtmasse, eines geschmolzenen organischen Peroxids, das eine Temperatur zwischen 40 und 90°C aufweist, kontinuierlich der auf eine Temperatur zwischen 0 und 30°C gekühlten Einzugszone eines Extruders zuzuführen. Unter geschmolzenem Peroxid wird dabei ein Peroxid verstanden, das bei Normaltemperatur, also bis 30°C fest ist, beim Erhitzen auf eine Temperatur über 40° bis maximal 90°C aber flüssig ist. Geeignete Peroxide sind das Dicumylperoxid (Schmelzpunkt 39°C) und das Bis-(tert.-butylperoxyisopropyl)benzol (Schmelzpunkt 45 bis 46°C). Die Einzugszone des Extruders, in die das stabilisatorhaltige Äthylenpolymerisat und getrennt davon das flüssige Peroxid eingeführt werden, ist auf 0 bis 30°C abgekühlt, so daß die Temperatur in diesem Einzugsbereich des Extruders um 10 bis 90°C niedriger ist als die Temperatur der Peroxidschmelze. Die Temperatur in der Einzugszone des Extruders ist also erfindungsgemäß stets niedriger als die Schmelztemperatur des Peroxids, so daß das in die Einzugszone des Extruders kontinuierlich eingebrachte Peroixd zweiphasig vorliegt: sowohl als Schmelze als auch als auskristallisierter Feststoff. Auf diese Weise wird eine störungsfreie Förderung des Äthylenpolymerisats und des Peroxids aus der Einzugszone des Extruders durch die Schmelzzone, in der eine Temperatur zwischen 110 und 135°C herrscht, bis zum Extruderaustrag möglich.

Die vernetzbare peroxid- und stabilisatorhaltige Äthylenpolymerisatmasse wird nach Verlassen des Extruders in üblicher Weise zu Granulat oder Formteilen verarbeitet.

Die mit der Erfindung erzielten Vorteile bestehen insbesondere darin, daß man ein völlig homogenes Äthylenpolymerisat erhält, das frei von Verunreinigungen ist und das für Isolierungen von Hochspannungskabeln besonders gut geeignet ist.

Beispiel 1

Polyäthylen der Dichte 0,92 g/cm$^3$ und des Schmelzindex von 2,7 g/10 min. wird in einem Kneter mit 0,3 Gewichtsprozent 4,4'-Thio-bis-(6-tert.-butyl-m-cresol) bei Temperaturen von 200°C homogen vermischt. Das Material wird einem Extruder zugeführt und bei einer Temperatur von 200°C durch ein Sieb von 400 mesh gefördert und granuliert. Das erhaltene Granulat wird einer zweiten Extrusion zugeführt, wobei in den Einzugsteil des Extruders getrennt vom Granulat 2,3 Gewichtsprozent, bezogen auf das Gewicht der Gesamtmischung, Dicumylperoxid zudosiert werden. Die Dosierung des Dicumylperoxids erfolgt mit einer Dosierpumpe bei 55°C. Das Dosierrohr endet in der Einzugsöffnung des Extruders 5 cm oberhalb der Schnecke. Der Einzugsteil (= Einzugszone) des Extruders ist auf 20°C gekühlt. Die Masse wird im Extruder aufgeschmolzen, homogenisiert bei einer Temperatur von 125°C und anschließend granuliert.

Aus dem erhaltenen Granulat werden bei 200°C Preßplatten hergestellt. Bei dieser Temperatur zerfällt das Peroxid und das Polyäthylen wird vernetzt. Die Preßplatten haben die Abmessungen 200 x 200 x 1,25 $mm^3$. Zehn Preßplatten werden auf einem Leuchttisch mit einer 10fach vergrößerten Meßlupe nach Verunreinigungen abgesucht. Alle unter diesen Bedingungen sichtbaren Verunreinigungen werden gezählt und vermessen. Das Meßergebnis ist in der Tabelle als Beispiel 1 wiedergegeben.

## Beispiel 2

Polyäthylen der Dichte 0,92 $g/cm^3$ und des Schmelzindex von 2,7 g/10 min. wird in einem Kneter mit 0,3 Gewichtsprozent 4,4'-Thio-bis-(6-tert.-butyl-m-cresol) und 2,3 Gewichtsprozent Dicumylperoxid bei einer Temperatur von 125°C homogen vermischt. Das Material wird einem Extruder zugeführt und bei einer Massetemperatur von 125°C extrudiert und granuliert.

Wie unter Beispiel 1 werden aus dem Granulat Preßplatten hergestellt und nach Verunreinigungen abgesucht. Die Verunreinigungen sind in der Tabelle als Beispiel 2 wiedergegeben.

## Tabelle

Gemessene Verunreinigungen an 10 Preßplatten

|  | Beispiel 1 | Beispiel 2 |
|---|---|---|
| Teilchengröße < 0,2 mm | 31 | 35 |
| Teilchengröße 0,2 bis 0,45 mm | 2 | 10 |
| Teilchengröße 0,45 bis 1 mm | 0 | 3 |
| Teilchengröße 1,5 mm | 0 | 1 |

Patentansprüche

1. Verfahren zur Herstellung von Formmassen aus vernetzbaren, einen oder mehrere Stabilisator(en) enthaltenden Äthylenpolymerisaten der Dichte von 0,918 bis 0,935 g/cm$^3$ und des Schmelzindex von 0,05 bis 25 g/10 min., dadurch gekennzeichnet, daß man in der angegebenen Reihenfolge

   a) das Äthylenpolymerisat bei einer Temperatur zwischen 150 und 200°C mit dem Stabilisator mischt,

   b) die Heiße Schmelze durch eine Siebpassage von Verunreinigungen trennt,

   c) die gereinigte Schmelze granuliert und abkühlt,

   d) das erhaltene Granulat und gleichzeitig, aber getrennt vom Granulat, 1,0 bis 3,0 Gewichtsprozent eines geschmolzenen organischen Peroxids, das eine Temperatur von 40 bis 90°C aufweist, kontinuierlich der auf 0 bis 30°C gekühlten Einzugszone eines Extruders zuführt,

   e) in der Schmelzenzone des Extruders bei Temperaturen zwischen 110 und 135°C mischt und

   f) die so erhaltene vernetzbare Polymerisatmischung in üblicher Weise granuliert oder direkt zum Formteil verarbeitet.

2. Verfahren nach Anspruch 1, dadurch gekennzeichnet, daß das organische Peroxid Dicumylperoxid ist.

3. Verfahren nach Anspruch 1, dadurch gekennzeichnet, daß

BASF Aktiengesellschaft  -9-  0000357

das organische Peroxid Bis-(tert.-butyl-peroxyisopropyl-) benzol ist.

4. Verfahren nach Anspruch 1, dadurch gekennzeichnet, daß der Stabilisator aus 0,1 bis 0,6 Gewichtsprozent 4,4'-Thio-bis-(6-tert.-butyl-m-cresol) besteht.

5. Verfahren nach Anspruch 1, dadurch gekennzeichnet, daß die Siebpassage durch ein Sieb von 200 bis 500 mesh (nach ASTM E11/61) erfolgt.

6. Verwendung der Formmasse nach Anspruch 1 als Elektroisoliermasse.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 956 214 (S.L.TATE u.a.)<br>* Ansprüche 1,3; Spalte 1, Zeilen 41-57 * | 1-3,6 |
| | FR - A - 1 455 435 (DYNAMIT NOBEL)<br>*"Résumé"; Seite 2, Absätze 1,3, 7 * | 1,2,6 |
| D | DE - A - 2 220 147 (BASF)<br>* Patentansprüche 1,2; Seite 3, Absatz 1 * | 1 |
| A | GB - A - 1 025 672 (FURUKAWA DENKI)<br>* Patentanspruch 1 * | 6 |
| T | R.VIEWEG "Kunststoff-Handbuch", Band IV; "Polyolefine", Carl Hanser Verlag, München, 1969, Seiten 391-394<br>* Seite 392 * | 1,5 |

**KLASSIFIKATION DER ANMELDUNG (Int.Cl.²)**

C 08 J 3/20
// B 29 F 3/00
C 08 L 23/04
H 01 B 3/44

**RECHERCHIERTE SACHGEBIETE (Int. Cl.²)**

C 08 J 3/20
B 29 F 3/00
C 08 L 23/04
H 01 B 3/44

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-10-1978 | HALLEMEESCH |

EPA form 1503.1 06.78